# EUROPEAN PATENT SPECIFICATION

(11) **EP 0 816 708 B1**
(45) Date of publication and mention of the grant of the patent: **05.12.2001**
(21) Application number: 97304681.6
(22) Date of filing: 27.06.1997
(51) Int. Cl.: F16D 69/02

(54) **Friction material**
Reibungsmaterial
Matériau de friction

(30) Priority: 01.07.1996 JP 17149296
(43) Date of publication of application: 07.01.1998
(73) Proprietor: HONDA GIKEN KOGYO KABUSHIKI KAISHA, Minato-ku, Tokyo (JP)
(72) Inventor: Yoshida, Satoshi, c/o Honda R&D Co., Ltd., Saitama-ken (JP); Shibata, Katsuhiro, c/o Honda R&D Co., Ltd., Saitama-ken (JP)
(74) Representative: Calamita, Roberto

(56) References cited:
- EP-A- 0 594 172
- EP-A- 0 601 762
- EP-A- 0 701 071
- WO-A-96/18687
- DE-A- 4 335 499

## Description

The present invention relates to a friction material which is particularly suitable as a material for vehicular brakes.

A friction material of this kind comprises a fibrous material, a filler and a binder. While asbestos has long been used in a large quantity as the fibrous material, the use of a different material has recently been sought in order to create an improved environment for people doing the relevant work and prevent any environmental pollution caused by asbestos.

Ceramic, metal and organic fibers are known as fibrous materials for replacing asbestos. Known ceramic fibers include glass fibers, alumina fibers, rockwool, and potassium titanate fibers. Known metal fibers include steel, copper and brass fibers. Known organic fibers include aromatic polyamide fibers.

Alumina-silica and/or potassium titanate fibers have hitherto been used as the ceramic fibers. Alumina-silica is high in hardness, but potassium titanate is low. Alumina-silica has a high coefficient of friction (µ), but potassium titanate does not have a very high coefficient of friction. A mixture of these materials is sometimes used, since potassium titanate is effective for preventing brake squeak. An increase in the proportion of alumina-silica in order to obtain a mixture having a higher coefficient of friction (µ), however, results in a material which is more likely to do damage to a brake disc due to the hardness of alumina-silica.

As a result of our research into ceramic fibers to replace alumina-silica, we have found that aluminum borate (9Al₂O₃ • 2B₂O₃) fibers are useful as a substitute for alumina-silica fibers.

We have also found that the use of barium sulfate as a filler as suggested e.g. in document EP-A-701 071 is advantageous.

Thus, in one aspect, the present invention provides a friction material comprising a fibrous material, a filler comprising 5 to 20% by volume (of the total composition) barium sulphate and a phenolic resin binder, characterised in that said fibrous material comprises 2 to 20% by volume (of the total composition) aluminium borate fibers.

In the accompanying drawings:
Figure 1 is a graph showing the wear at 300°C of pads, in relation to the proportion of BaSO₄; and
Figure 2 is a graph showing the average coefficient of friction (µ) of mixtures of alumina-silica and aluminum borate fibers in relation to the proportion of aluminum borate fibers.

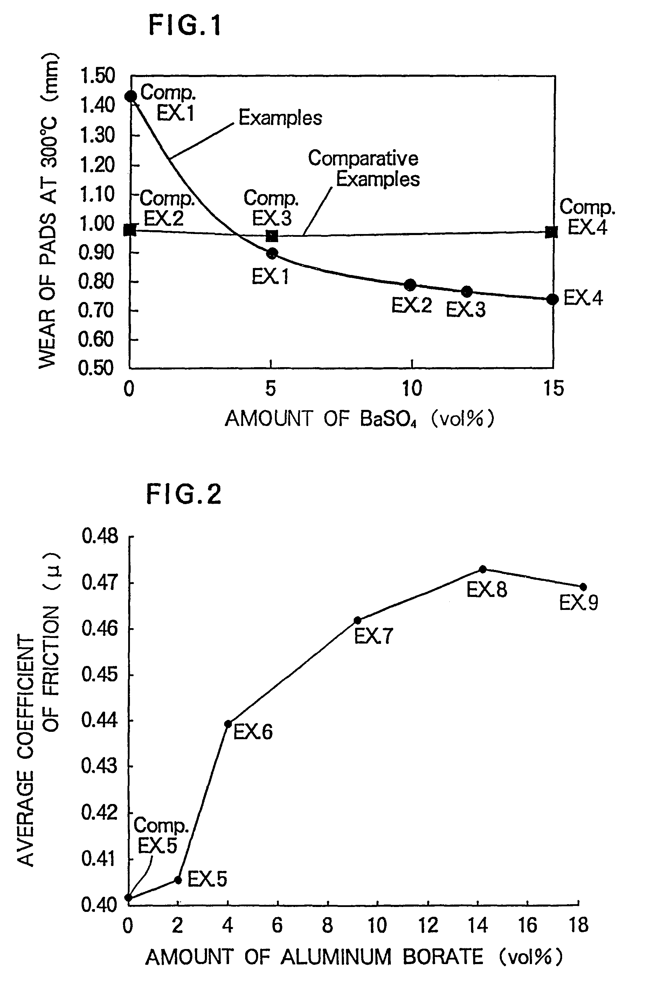

Figure 2 is a graph showing the relationship which we have found to exist between the proportion of aluminium borate in a mixture of alumina-silica and aluminium borate fibers and its average coefficient of friction (µ). As is clear therefrom, the value of µ begins to show a sharp rise from a mixture containing 2% by volume of aluminum borate and continues to show a general tendency to increase with an increase in the proportion, but if this proportion exceeds 20% by volume, no further increase in the coefficient of friction is achieved.

According to one aspect of this invention, therefore, the fibrous material contains not more than 20% by volume of aluminium borate fibers, since it is also required to contain potassium titanate of low hardness in order to prevent a brake squeak.

We have also found that aluminum borate fibers have a very low wear resistance at a high temperature (300°C), as shown in Comparative Example 1 in Figure 1. We have, therefore, made pads containing 4% by volume of aluminum borate fibers, 12% by volume of potassium titanate and a total of 15% by volume of BaSO₄ and CaCO₃, as shown in Table 3, and compared them in wear resistance at a high temperature.

As a result, we have found that the addition of at least 5% by volume of BaSO₄ enables a reduction in pad wear at a high temperature, and that undesirable brake squeak is likely to occur if this proportion exceeds 20% by volume.

By employing an appropriate amount of aluminum borate fibers, it becomes possible to produce a material having a satisfactorily high coefficient of friction.

The addition of an appropriate amount of barium sulfate makes a friction pad which has a satisfactorily high wear resistance at high temperature, while not causing any heavier wear of a brake disc than a pad of a conventional material does.

Thus, the material of the present invention has a high coefficient of friction, while also having the property of not causing any undesirable wear to a brake disc, as well as achieving satisfactorily high levels of fade resistance and thermal conductivity.

Ceramic fibers as a friction material of this invention replace the alumina-silica fibres to form a particularly suitable material for vehicular brakes. The material may be used for other purposes including a clutch facing material, and as a material for brakes and clutches in industrial equipment.

The present invention will now be described in further detail by way of examples embodying it together with comparative examples.

### EXAMPLES 1 TO 4 AND COMPARATIVE EXAMPLES 1 TO 4

### (1) Preparation of Test Samples:

### (1-1) Constituents:

Samples were prepared from constituents as shown in Table 1. Explanation will first be made of the preferred proportions of those constituents.

Aromatic polyamide fibers, such as para type pulp-like fibers, may be used in the amount of 2 to 20% by volume for making a material of improved durability which is less likely to do damage to a rotor. If the proportion is less than 2% by volume, the composition obtained is difficult to preform, and if it exceeds 20% by volume, the material obtained has too low a coefficient of friction at high temperature.

Ceramic fibers, such as potassium titanate, alumina-silica or aluminum borate fibers, may be used in the amount of 5 to 30% by volume for making a material having an improved coefficient of friction. If the proportion is less than 5% by volume, there is hardly any material obtained which has a satisfactorily improved coefficient of friction, and if it exceeds 30% by volume, an undesirable material is obtained which is very likely to do damage to a brake disc.

Copper fibers may be used in an amount of 2 to 10% by volume, for making a material which can prevent brake squeak and has an improved strength at a high temperature. If the proportion is less than 2% by volume, the material cannot be expected to produce a substantial result, and if it exceeds 10% by volume, an undesirable material is obtained which is likely to adhere to a rotor.

The proportions of aluminium borate and alumina-silica fibers will be set forth later.

An organic filler, such as cashew, melamine or phenol dust, may be used in the amount of 3 to 20% by volume by making a material which has a stable coefficient of friction at a low contact pressure. If the proportion is less than 3% by volume, the addition of the organic filler is of no use, and if it exceeds 20% by volume, a material is obtained having too low a coefficient of friction at high temperature.

Graphite may be used in the amount of 5 to 20% by volume as a solid lubricant. If the proportion is less than 5% by volume, the addition of the graphite is of little use, and if it exceeds 20% by volume, a material is obtained having too low a coefficient of friction.

An inorganic filler, such as molybdenum disulfide, zinc sulfide, lead sulfide or antimony trisulfide, may be used in the proportion of 5 to 20% by volume as an oil lubricant. If the proportion is less than 5% by volume, the addition of the inorganic filler is of little use, and if it exceeds 20% by volume, a material having too low a coefficient of friction is obtained.

BaSO₄ (barium sulfate) or CaCO₃ (calcium carbonate), or a mixture thereof may be used in the amount not exceeding 20% by volume as a filler. If its proportion exceeds 20% by volume, brake squeak will worsen.

Metal powder, such as a copper powder, a copper-zinc or -tin alloy powder, or an iron powder, may be used in an amount of 2 to 10% by volume for making a material capable of preventing a brake squeak and having a satisfactorily high coefficient of friction at a high temperature. If the proportion is less than 2% by volume, the addition of the metal powder is of little use, and if it exceeds 10% by volume, an increased wear of the brake disc will occur.

Phenolic resin may be used in the amount of 8 to 20% by volume as a binder. If the proportion is less than 8% by volume, it produces only a low binding effect, and if it exceeds 20% by volume, a material is obtaining having too low a coefficient of friction at high temperature.

**TABLE 1**

| (vol.%) | | | | | | | | | |
|---|---|---|---|---|---|---|---|---|---|
| | | Comp.Ex. | Examples | | | | Comp. Ex. | | |
| | | 1 | 1 | 2 | 3 | 4 | 2 | 3 | 4 |
| Fibrous Material | aromatic polyamide fibers | 4 | 4 | 4 | 4 | 4 | 4 | 4 | 4 |
| | ceramic fibers | 12 | 12 | 12 | 12 | 12 | 12 | 12 | 12 |
| | copper fibers | 3 | 3 | 3 | 3 | 3 | 3 | 3 | 3 |
| | aluminium borate fibers | 4 | 4 | 4 | 4 | 4 | - | - | - |
| | alumina-silica fibers | - | - | - | - | - | 4 | 4 | 4 |
| | | | | | | | | | |
| Friction Controller | organic filler | 18 | 18 | 18 | 18 | 18 | 18 | 18 | 18 |
| | graphite | 10 | 10 | 10 | 10 | 10 | 10 | 10 | 10 |
| | inorganic filler | 14 | 14 | 14 | 14 | 14 | 14 | 14 | 14 |
| | BaSO₄ | - | 5 | 10 | 12 | 15 | - | 5 | 15 |
| | CaCO₃ | 15 | 10 | 5 | 3 | - | 15 | 10 | - |
| | metal powder | 3 | 3 | 3 | 3 | 3 | 3 | 3 | 3 |
| | | | | | | | | | |
| Binder | phenolic resin | 17 | 17 | 17 | 17 | 17 | 17 | 17 | 17 |
| | | | | | | | | | |
| | Total | 100 | 100 | 100 | 100 | 100 | 100 | 100 | 100 |

The samples were prepared from compositions containing 4% by volume of aromatic polyamide fibers, 12% by volume of potassium titanate fibers, 3% by volume of copper fibers, 18% by volume of organic filler, 10% by volume of graphite, 14% by volume of inorganic filler, 3% by volume of metal powder and 17% by volume of phenolic resin as common constituents, and further containing a total of 19% by volume of other constituents differing from one example to another as shown in Table 1 and below:
Comparative Example 1 - 4% by volume of aluminum borate fibers and 15% by volume of CaCO₃;
Example 1 - 4% by volume of aluminium borate fibers, 5% by volume of BaSO₄ and 10% by volume of CaCO₃;
Example 2 - 4% by volume of aluminium borate fibers, 10% by volume of BaSO₄ and 5% by volume of CaCO₃;
Example 3 - 4% by volume of aluminium borate fibers, 12% by volume of BaSO₄ and 3% by volume of CaCO₃;
Example 4 - 4% by volume of aluminium borate fibers and 15% by volume of BaSO₄;
Comparative Example 2 - 4% by volume of alumina-silica fibers and 15% by volume of CaCO₃;
Comparative Example 3 - 4% by volume of alumina-silica fibers, 5% by volume of BaSO₄ and 10% by volume of CaCO₃; and
Comparative Example 4 - 4% by volume of alumina-silica fibers and 15% by volume of BaSO₄.

In Comparative Examples 2 to 4, alumina-silica fibers were used instead of aluminium borate fibers, as shown. Details of these two kinds of fibers are shown in Table 2 below.

**TABLE 2**

| | | |
|---|---|---|
| fibers | aluminium borate | alumina-silica |
| chemical formula brand names | 9Al₂O₄ · 2B₂O₃ ALBOREX from Shikoku Kasei | Al₂O₃ · SiO₂ RFC400-SL from Toshiba Monoflux |
| | | |
| average fiber diameter | 0.5 - 1.0 µm | 2 - 4 µm |
| | | |
| average fiber length | 10 - 30 µm | 300 - 500 µm |

The balance of Comparative Example 2 is 4% by volume of alumina-silica fibers and 15% by volume of CaCO₃. The balance of Comparative Example 3 is 4% by volume of alumina-silica fibers, 5% by volume of BaSO₄ and 10% by volume of CaCO₃.

The balance of Comparative Example 4 is 4% by volume of alumina-silica fibers and 15% by volume of BaSO₄.

### (1-2) Preforming:

The constituents of each composition as shown above were uniformly mixed by a known mixer and their mixture was subjected to 10 seconds of preforming at ordinary temperature in a molding machine applying a pressure of 100 kg/cm² to make a preform.

### (1-3) Molding:

The preform was subjected to 15 minutes of molding under heat and pressure in a molding machine having a mold temperature of 160°C and applying a pressure of 250 kg/cm².

### (1-4) Heat treatment:

The molded product was held in a heating furnace having a temperature of 200°C for eight hours of heat treatment, and was allowed to cool.

### (1-5) Grinding:

The heat treated product was ground to yield a friction material.

### (2) Friction Test:

A general effectiveness test conforming to C-406 of JASO (Japanese Automobile Standards) was conducted on the friction material for obtaining the average of the first to fourth values of its effectiveness as its "average coefficient of friction (µ)". The results are shown in Table 3 below.

**TABLE 3**

| | | Comp. Ex. | | Examples | | | Comp. Ex. | | |
|---|---|---|---|---|---|---|---|---|---|
| | | 1 | 1 | 2 | 3 | 4 | 2 | 3 | 4 |
| principal constituents (vol%) | aluminium borate | 4 | 4 | 4 | 4 | 4 | - | - | - |
| | alumina-silica | - | - | - | - | - | 4 | 4 | 4 |
| | BaSO₄ | - | 5 | 10 | 12 | 15 | - | 5 | 15 |
| | CaCO₃ | 15 | 10 | 5 | 3 | - | 15 | 10 | - |
| | | | | | | | | | |
| | average µ | 0.439 | 0.444 | 0.443 | 0.443 | 0.444 | 0.401 | 0.402 | 0.398 |
| | | | | | | | | | |
| wear of pad (mm) | 100°C | 0.17 | 0.20 | 0.18 | 0.16 | 0.20 | 0.17 | 0.15 | 0.20 |
| | 200°C | 0.63 | 0.61 | 0.64 | 0.59 | 0.64 | 0.61 | 0.63 | 0.62 |
| | 300°C | 1.43 | 0.90 | 0.80 | 0.78 | 0.75 | 0.98 | 0.96 | 0.97 |
| wear of disc (mm) | 100°C | 2 | 5 | 3 | 6 | 7 | 5 | 4 | 5 |
| | 200°C | 14 | 13 | 12 | 14 | 13 | 13 | 14 | 14 |
| | 300°C | 20 | 19 | 19 | 20 | 20 | 20 | 19 | 20 |

The products of Examples 1 to 4 embodying this invention had an average coefficient of friction (µ) of 0.443 or 0.444, while the product of Comparative Examples 1 had an average coefficient of 0.439, as shown in Table 3. On the other hand, the products of Comparative Examples 2 to 4 had an average coefficient (µ) of 0.398 to 0.402 which was about 10% lower than that of any product embodying this invention. These results confirm that the friction materials containing aluminum borate fibers (Examples 1 to 4 and Comparative Example 1) have a higher coefficient of friction than that of the friction materials containing alumina-silica fibers (Comparative Examples 2 to 4). The average coefficient of friction of any such material is considered to depend on the amount of aluminum borate fibers which it contains, too, but this point will be discussed later.

### (3) Pad and Disc Wear Tests:

Wear tests conforming to the standard C-427-83 of JASO were conducted on pads and discs at different temperatures of 100°C, 200°C and 300°C to determine the wear thereof that would result from 1000 brake applications. The pads were of the friction materials which had been made as described above, and the discs were of FC250. The test results are shown in Table 3.

The wear of the discs as determined at 300°C was 19 or 20 mm, and did not appreciably differ from one example to another. On the other hand, the pads formed from the materials according to Comparative Example 1 and Examples 1 to 4 showed a substantial difference of wear at 300°C in the range of 0.75 to 1.43 mm, while the pads formed from the materials according to Comparative Examples 2 to 4 showed a nearly equal wear of 0.96 to 0.98 mm at 300°C.

Reference is made to Figure 1, which is a graph obtained by plotting the wear (mm) of the pads at 300°C as shown in Table 3 along the axis of ordinates against the proportion (vol. %) of BaSO₄ along the axis of abscissas. The pad formed from the material according to Comparative Example 1 is inferior to those formed from the materials according to Comparative Examples 2 to 4, as it shows a much larger amount of wear. The pads formed from the materials according to Examples 1 to 4 and containing at least 5% by volume of BaSO₄ are superior to those formed from the materials according to Comparative Examples 2 to 4, as they show a satisfactorily smaller amount of wear.

It has also been found that a material containing more than 20% by volume of BaSO₄ is less capable of stopping brake squeak. Therefore, the material of this invention contains 5 to 20% by volume of BaSO₄.

### EXAMPLES 5 TO 9 AND COMPARATIVE EXAMPLE 5

Discussion will now be directed to the preferred proportion of aluminium borate fibers. Table 4 shows a set of examples of compositions which differ from one another only in containing different amounts of aluminium borate fibers, as well as alumina-silica fibers.

**TABLE 4**

| (vol.%) | | | | | | | |
|---|---|---|---|---|---|---|---|
| | | Comp. Ex. | Examples | | | | |
| | | 5 | 5 | 6 | 7 | 8 | 9 |
| Fibrous Material | aromatic polyamide fibers | 6 | 6 | 6 | 6 | 6 | 6 |
| | copper fibers | 3 | 3 | 3 | 3 | 3 | 3 |
| | aluminium borate fibers | - | 2 | 4 | 9 | 14 | 18 |
| | alumina-silica fibers | 23 | 21 | 19 | 14 | 9 | 5 |
| | | | | | | | |
| Frictrion Controller | organic filler | 8 | 8 | 8 | 8 | 8 | 8 |
| | graphite | 10 | 10 | 10 | 10 | 10 | 10 |
| | inorganic filler | 9 | 9 | 9 | 9 | 9 | 9 |
| | BaSO₄ | 18 | 18 | 18 | 18 | 18 | 18 |
| | metal powder | 5 | 5 | 5 | 5 | 5 | 5 |
| | | | | | | | |
| Binder | phenolic resin | 18 | 18 | 18 | 18 | 18 | 18 |
| | | | | | | | |
| | Total | 100 | 100 | 100 | 100 | 100 | 100 |

Figure 2 is a graph obtained by plotting the proportion of aluminum borate fibers in each material and its average coefficient of friction (µ). As is obvious from Figure 2, the material of Example 5 containing 2% by volume of aluminum borate fibers did not show a great increase in its value of µ from that of the material of Comparative Example 5 not containing any aluminum borate fibers, but Examples 6 to 8 showed a sharp increase in their values of µ. It has, therefore, been concluded that no material containing less than 2% by volume of aluminium borate fibers has a satisfactorily high coefficient of friction. It has also been found that any material containing more than 20% by volume of aluminium borate fibers shows a sharp drop in its coefficient of friction after a gradual lowering from the peak value achieved by the material of Example 8 containing 14% by volume of aluminium borate fibers. Therefore, the material of this invention contains 2 to 20% by volume of aluminium borate fibers.

## Claims

1. A friction material comprising a fibrous material, a filler comprising 5 to 20% by volume (of the total composition) barium sulphate and a phenolic resin binder, **characterised in that** said fibrous material comprises 2 to 20% by volume (of the total composition) aluminium borate fibers.

2. A friction material as claimed in claim 1, comprising 2 to 20% by volume of aromatic polyamide fibers.

3. A friction material as claimed in claim 1 or claim 2, comprising 5 to 30% by volume of ceramic fibers.

4. A friction material as claimed in any one of the preceding claims comprising 2 to 10% by volume of copper fibers.

5. A friction material as claimed in any one of the preceding claims, comprising 3 to 20% by volume of an organic filler.

6. A friction material as claimed in any one of the preceding claims, comprising 5 to 20% by volume of graphite.

7. A friction material as claimed in any one of the preceding claims, comprising 5 to 20% by volume of an inorganic filler.

8. A friction material as claimed in any one of the preceding claims, comprising 2 to 10% by volume of a metal powder.

9. A friction material as claimed in any one of the preceding claims, comprising 8 to 20% by volume of a phenolic resin.

10. A brake pad or clutch lining comprising a friction material as claimed in any one of the preceding claims.

## Patentansprüche

1. Reibmaterial, umfassend ein Fasermaterial, ein Füllmittel, welches 5 bis 20 Volumen-% (der Gesamtzusammensetzung) an Bariumsulfat enthält, und ein Phenolharzbindemittel, **dadurch gekennzeichnet, dass** das Fasermaterial 2 bis 20 Volumen-% (der gesamten Zusammensetzung) an Aluminium-Borat-Fasern enthält.

2. Reibmaterial nach Anspruch 1, umfassend 2 bis 20 Volumen-% an aromatischen Polyamidfasern.

3. Reibmaterial nach Anspruch 1 oder Anspruch 2, umfassend 5 bis 30 Volumen-% an Keramikfasern.

4. Reibmaterial nach einem der vorangehenden Ansprüche, umfassend 2 bis 10 Volumen-% an Kupferfasern.

5. Reibmaterial nach einem der vorangehenden Ansprüche, umfassend 3 bis 20 Volumen-% an organischem Füllmittel.

6. Reibmaterial nach einem der vorangehenden Ansprüche, umfassend 5 bis 20 Volumen-% an Graphit.

7. Reibmaterial nach einem der vorangehenden Ansprüche, umfassend 5 bis 20 Volumen-% an anorganischem Füllmittel.

8. Reibmaterial nach einem der vorangehenden Ansprüche, umfassend 2 bis 10 Volumen-% an Metallpulver.

9. Reibmaterial nach einem der vorangehenden Ansprüche, umfassend 8 bis 20 Volumen-% an Phenolharz.

10. Bremsbelag oder Kupplungsbelag, umfassend ein Reibmaterial nach einem der vorangehenden Ansprüche.

## Revendications

1. Matériau de friction comprenant un matériau fibreux, une charge comprenant 5 à 20 % en volume (de la composition totale) de sulfate de baryum et un liant en résine phénolique, **caractérisé en ce que** ledit matériau fibreux comprend 2 à 20 % en volume (de la composition totale) de fibres de borate d'aluminium.

2. Matériau de friction selon la revendication 1, comprenant 2 à 20 % en volume de fibres de polyamide aromatique.

3. Matériau de friction selon la revendication 1 ou la revendication 2, comprenant 5 à 30 % en volume de fibres en céramique.

4. Matériau de friction selon l'une quelconque des revendications précédentes, comprenant 2 à 10 % en volume de fibres de cuivre.

5. Matériau de friction selon l'une quelconque des revendications précédentes, comprenant 3 à 20 % en volume de charge organique.

6. Matériau de friction selon l'une quelconque des revendications précédentes, comprenant 5 à 20 % en volume de graphite.

7. Matériau de friction selon l'une quelconque des revendications précédentes, comprenant 5 à 20 % en volume d'une charge inorganique.

8. Matériau de friction selon l'une quelconque des revendications précédentes, comprenant 2 à 10 % en volume d'une poudre métallique.

9. Matériau de friction selon l'une quelconque des revendications précédentes, comprenant 8 à 20 % en volume d'une résine phénolique.

10. Plaquette de frein ou garniture d'embrayage comprenant un matériau de friction selon l'une quelconque des revendications précédentes.
